# EUROPEAN PATENT SPECIFICATION

(11) **EP 3 118 375 B1**
(45) Date of publication and mention of the grant of the patent: **11.04.2018**
(21) Application number: 15176528.6
(22) Date of filing: 13.07.2015
(51) Int. Cl.: E02D 17/20, E02D 3/08, E02D 15/04, E02D 5/36

(54) **METHOD FOR IMPROVING AN INWARDS STABILITY OF A LEVEE**
VERFAHREN ZUR VERBESSERUNG EINER NACH INNEN GERICHTETEN STABILITÄT EINER BÖSCHUNGSSICHERUNG
PROCÉDÉ POUR AMÉLIORER LA STABILITÉ INTERNE D'UNE BERGE

(43) Date of publication of application: 18.01.2017
(73) Proprietor: Dura Vermeer Beton & Waterbouw B.V., 2131 LS Hoofddorp (NL); Fugro GeoServices B.V., 2260 AB Leidschendam (NL); Keller Holding GmbH, 63067 Offenbach/Main (DE); Ploegam B.V., 5383 KM Vinkel (NL)
(72) Inventor: van Haastert, Adrianus Gerardus Gregorius, 2751 DD Moerkapelle (NL); Looij, Richard Jacob, 2425 AJ Aarlanderveen (NL); Hockx, Josephus Antonius Wilhelmus, 2406 AN Alphen aan den Rijn (NL)
(74) Representative: Nederlandsch Octrooibureau

(56) References cited:
- CH-A5- 625 291
- DE-A1- 19 856 327
- JP-A- S63 110 319

## Description

### TECHNICAL FIELD

The invention relates to a method for improving an inwards stability of a levee.

### BACKGROUND ART

A "levee" (also referred to as a "dike") is a flood bank that protects the nearby lowland against flooding. Levees can be roughly classified into primary levees comprising of sea-dikes, river-dikes, and inland water dikes and secondary levees (situated within the primary dike ring).

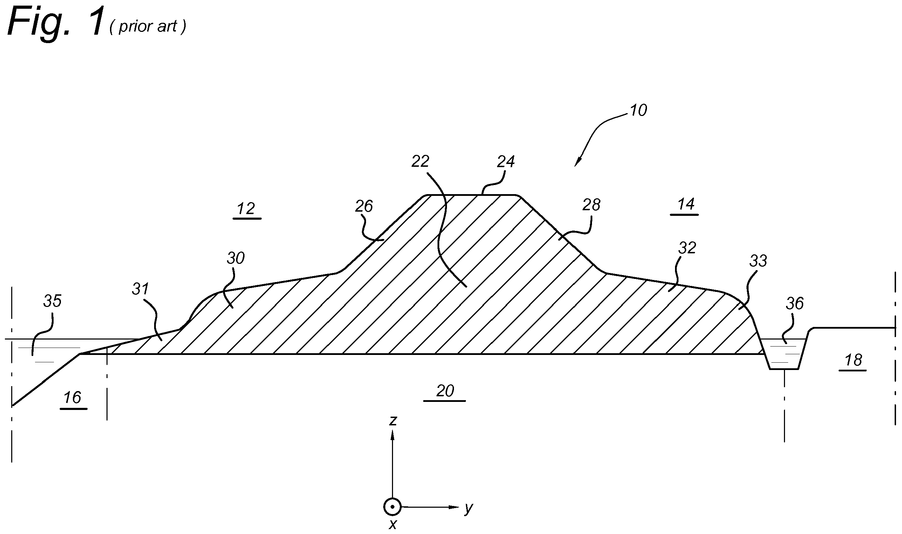

A general overview of conventional terminology used for describing levees is presented below, with reference to Figure 1. Cartesian coordinates are used to define directions and spatial properties of typical levee elements. Reference symbol X is used to indicate a longitudinal direction. For a river-dike, the longitudinal direction X typically corresponds to the macroscopic flow direction of the river. Reference symbol Y is used to indicate a transversal direction perpendicular to the longitudinal direction X. The longitudinal direction X and the transversal direction Y span a virtual plane that is predominantly parallel with the horizontal (which macroscopically corresponds with the earth surface and is directed perpendicular to the direction of gravity). Reference symbol Z is used to indicate a height direction (vertical direction), which is perpendicular to the longitudinal direction X and the transversal direction Y. The prepositions "above" and "below" pertain to the height direction Z.

Figure 1 shows a side view of a levee 10 in a cross-sectional profile along the transverse and vertical directions Y, Z. The levee 10 and typical elements shown in Figure 1 may be present in river-dikes, inland water dikes, as well as sea dikes. Locations and dimensions of the elements may vary in each levee type.

Figure 1 shows that the foundation below and near the levee 10 may be partitioned into a waterside land 16, a lowland 18, and a levee base 20. On a water side 12 of the levee 10, a body of water 35 (e.g. river, lake, or sea) is situated along a waterside land 16. For a river-dike, this water body 35 is formed by a river with a macroscopic flow-direction along the longitudinal direction X. The lowland 18 is situated on a land side 14 of the levee 10. A dry patch of land is situated at/along the lowland 18. Various structures and vegetation (e.g. roads, buildings, trees, etc) may be present in this region (not shown in Figure 1).

As shown in Figure 1, the levee 10 is situated on a levee base 20, and comprises a levee core 22, a levee crown 24, a waterside slope 26, a landside slope 28, a waterside berm 30 with toe 31, and a landslide berm 32 with a heel 33.

The levee base 20 corresponds with the subsoil below the levee 10. The levee core 22 forms the supporting construction onto which the various elements of the levee 10 are situated. The levee core 22 must remain stable under the total load from the various levee elements, as well as the (variable) load of the water and traffic present on the levee 10.

The crown 24 defines the apex of the levee structure. The height of the crown 24 has a significant impact on the probability of overtopping and overflowing if the levee 10 is subjected to changing water levels (e.g. resulting from wave action). A road, other structures, and/or vegetation may also be present on the crown 24 (not shown in Figure 1).

The waterside slope 26 defines a slanting surface on the water side 12 of the levee 10. The landside slope 28 defines another slanting surface on the land side 14 of the levee 10. The waterside and landside slopes 26, 28, and in particular their respective tilting angles, are an important factor for the levee's stability.

The waterside berm 30 may be present in particular in sea-dikes and inland water dikes, to reduce overtopping by waves and thus improve the damming efficiency. The landside berm 32 may be present to increase the stability of the landside slope 28. The waterside toe 31 forms the waterside base perimeter of the levee 10. The landside heel 33 forms the landside base perimeter of the levee 10. A drainage trench 36 is provided along the landside heel 33 of the levee 10, arranged for dewatering the levee. Sometimes, drainage elements are provided in a part of the levee core 22 or the berm 32, which may be fluidly connected to the trench 36.

The levee elements 22-33 and the subsoil elements 16-20 are typically formed by soil layers of different constitution and typical mass densities, like clay, peat, and/or sand. For levees, the hydrological properties and the behavior of the soil layers in response to changing water conditions are of great impact on the stability of the levee 10 and the hydraulic load (ground water) on the levee 10. This situation greatly differs from that of purely land-based embankments (e.g. which may be employed as a base for supporting roads and train tracks). As a consequence of high water conditions, the ground water level in the levee core 22 will rise and is affected by the permeability of the top layer, the subsoil 20, the core 22 and the berm 32. Deeper sand layers in the subsoil 20 can develop high hydraulic loads, affecting the stability of non permeable top layers at the inland 18 and berm 32 and trench 36. This affects failure mechanisms of the levee 10.

If the structural integrity of a levee (e.g. levee 10 in figure 1) is insufficient to resist the influence of the water 35, then the levee may need to be rebuilt. In view of cost and logistic considerations, it is preferable to reinforce an existing levee instead of breaking it down and building a new levee from scratch.

A levee needs to be resistant to various failure mechanisms. Two such failure mechanisms relate to macro (in)stability and piping.

The term "macro stability" (of a levee) corresponds to the ability of the levee to resist sliding of the slopes along slip surfaces extending through the core and the base of the levee. Such sliding faults may occur along planar slip surfaces as well as along curved slip surfaces (e.g. cylindrical shape, piecewise curved, etc). Here, the term "surface" should not be construed narrowly as a plane or an outer surface, but be generally construed as a surface in the geometrical sense (i.e. a geometric entity that requires a two dimensional parameter domain for defining a thin continuous object extending in three dimensional space). Such a slip surface describes the soil region along which the sliding faults may occur. Levee properties that affect the macro stability are e.g. the geometry of the levee elements, the location of the various soil layers in/below the levee, the mass densities and mechanical properties of these soil layers (e.g. shear strength, compressibility, etc), as well as the dynamic external loads acting on the levee (e.g. resulting from water dynamics, weather influences, and potential traffic and structures on the levee) and groundwater conditions affected by water dynamics.

The term "piping" relates to seepage of ground water though the sand layer(s) underneath the levee, usually in the landside direction. Such sand layers are typically relatively permeable, and the eroding effect of this seepage creates local conduits that extend through these sand layers underneath the landside slope 28 and berm 32. Such conduits, which may for example emanate in the trench 36, will weaken the levee in locations that are relatively hard to predict.

A known method for improving the macro stability of an existing levee involves the construction of a support berm made of natural materials, pre-processed materials, and/or materials recycled from industry. It is also known that a levee may be reinforced by introducing rigid partitioning walls into various regions of the levee, to increase stability and also water impermeability of the levee. These walls affect the permeability of the levee and the subsoil.

A more recent method for reinforcing a levee is known as the so-called "mixed-in-place" (MIP) method. In this method, selected portions of the soil layers inside the levee are mixed in situ with cement to form mixed soil columns. These soil columns are mixed into the levee core, starting from the crown or the landside slope, and extend in a tilted direction downwards to the supporting sand layer located below the levee. The MIP method involves the formation of rows of overlapping columns ("panels") that extend in the transversal direction perpendicular to the levee. By joining several column panels, blocks of stabilized ground are formed which are mutually separated by batches of unmixed soil.

The MIP method is relatively labor intensive. It would therefore be desirable to provide a method for improving the inwards stability of a levee using a relatively simple non-invasive procedure.

It would further be desirable to provide a technical solution for stabilizing a levee that forms an alternative to the method described in patent document JPS63110391A.

### SUMMARY OF INVENTION

According to an aspect of the invention, there is provided a method for improving an inwards stability of an existing levee including a landslide slope and a landside berm, wherein the method comprises placing columns through the landside berm into one or more soft soil layers with corresponding soil volumetric weights, wherein the columns have a column volumetric weight that is at least 10% larger than the soil volumetric weights, and wherein the columns comprise a mineral aggregate and an impermeable filler.

The columns serve as structures for increasing the average mass density of the penetrated soil, and for increasing the total mass of the landside berm region of the levee. The resulting mass increase of the landside berm contributes to the stability of inwards sliding surfaces and reduces to probability of heave or hydraulic lift of this landside berm region, without having to increase the dimensions of the existing landside berm and/or to tamper with surrounding structures. The term "larger volumetric weight" refers herein to a (saturated) volumetric weight of the column material - expressed in kilonewtons per cubic meter (kN/m³) - that is at least 10%, more specifically at least 25% larger than the volumetric weight(s) of the corresponding soft soil layer(s). The soft soil layers may correspond to one or more of the soil layers underneath the berm. Alternatively or in addition, the berm may be formed at least partially by one or more of such soft soil layers.

The mineral aggregate which serves to increase the total mass of the landside berm region of the levee may for example comprise crushed rock, gravel, or other mineral granules with a relatively high average mass density. In one exemplary embodiment an average particle size of the mineral aggregate of at least 2 mm and/or to a maximum of 80 mm may be used.

The impermeable filler component in the columns yields a sealing effect and serves to lower a vertical fluid permeability of the columns to such an extent that the resulting column permeability is similar to or less than a fluid permeability of at least the upper soil layer of the berm, through which the columns extend. The columns may for example have a fluid permeability that is at least 10% smaller than the permeability of the upper soil layer. More specifically, the permeabilities of the columns and the upper soil layer may be associated with characteristics relating to the transport of water. Hydraulic conductivity (also known as hydraulic permeability) is a measure of how easily water can pass through soil or other material. Accordingly, the impermeable filler component in the columns may serve to lower a vertical hydraulic conductivity of the columns to values similar to or less than a hydraulic conductivity of at least the upper soil layer of the berm through which the columns extend.

In one example, this upper soil layer may be formed by a clay layer, which typically has a hydraulic conductivity in a range of Kf = 10⁻⁵ to 10⁻⁷ m/s. In this example, the columns may have a hydraulic conductivity of 10⁻⁷ m/s or smaller.

The smaller permeability (or hydraulic conductivity) of the columns with respect to the upper soil layer prevents the columns from acting as fluid drainage conduits between the berm surface and the underlying soil layers. Another aspect of using the impermeable filler is that said filler material fills in the spaces between the mineral aggregate so that the overall density and specific weight of the columns is increased. Thus, the filler also contributes to increase the total mass of the landside berm region and the overall stability of the levee.

The columns can comprise for example an amount of at least 60 weight percent mineral aggregate and/or a maximum of 80 weight percent mineral aggregate. The amount of impermeable filler material can be for example at least 20 weight percent and/or can amount to a maximum of 40 weight percent.

Application of the columns may also yield an increase of the levee's resistance against the failure mechanism piping, because the leakage length (i.e. the flow path for the ground water seepage) becomes longer.

Because each of the columns may be inserted into/through the landside berm of the levee by means of a local procedure, and because the resulting column distribution yields a negligible increase in the total size of the levee, the proposed method may be employed without needing geometric adaptation of the levee and/or needing special measures to protect the existing constructions and ecology near the levee. In this method, the column distribution may be locally adjusted - possibly even omitting columns in selected regions - to adapt to existing constructions, cabling, conduits, plant roots, etc. The proposed method is particularly effective if applied in conjunction with soft soil layers, which have typical volumetric weights ranging from 10 kN/m³ to 14 kN/m³. Examples of such soft soil types are peat and organic clay.

Because columns primarily serve to weight/load the relatively soft soil layers, it is not essential to let the columns extend deeper down into a lower supporting soil layer (in the Netherlands, this support layer corresponds to Holocene or at a deeper level the Pleistocene sand layer). Hence, the columns do not need to be forced into the densely compacted sand layer e.g. via vibration, so the risk for liquefaction effects may be kept small.

The levee typically comprises a landside heel that delineates the landside berm. According to an embodiment of the method, the region in which the columns are applied spans at least the berm region directly adjacent to the landside heel.

According to an embodiment, the impermeable filler comprises a hydraulic binding agent. The hydraulic binding agent constitutes a binder that is able to harden under water, to allow column formation in the (humid) soil layers in/underneath an existing levee. The binding agent may comprise at least one of cement, limestone, acrylates, resin and soluble silicates (water glass). This hydraulic binding agent may also simultaneously serve as the impermeable filler present in the columns to reduce fluid permeability (or hydraulic conductivity).

As an alternative or in addition, the impermeable filler may also comprise a non-binding material such as bentonite. In an exemplary embodiment, in which the impermeable filler comprises both a hydraulic binding agent and a non-binding material, an amount of at least 90 weight percent of hydraulic binding agent (as percentage of the overall impermeable filler mass) and/or an amount of a maximum of 10 weight percent non-binding material (as percentage of the overall impermeable filler mass) may be used.

According to an exemplary embodiment, the mixture of the aggregate material and the impermeable filler may have a volumetric weight with a value of at least 18 kN/m³. By using a granular mixture of aggregate material and impermeable filler, a significance increase of the average volumetric weight(s) of the soft soil layer(s) may be achieved, and the construction of such columns may be realized by proven methods.

According an embodiment, the granular mixture, respectively the columns made therefrom, can comprises further fillers for adapting at least one of the rheological properties, the strength properties, or the hardening properties of the granular mixture and the column, respectively.

Exemplary further fillers are plasticizers that serve to liquefy the filler suspension, to improve the processability thereof. Other options for the further fillers are retarding agents that serve to delay the stiffening/hardening of the filler suspension, or fiber materials as discussed herein below. Preferably, the component of further fillers is relatively small i.e. up to 5 weight %, and more preferably about 3 weight % of the granular mixture.

According to an embodiment, the method comprises determining a slip surface of most probable sliding fault for the landside slope and the landside berm, and partitioning of the slip surface into a torque inducing portion related to the crown of the levee and a torque resisting portion related to the landside berm. In this embodiment, the columns are arranged in the one or more soft soil layers at the torque resisting portion of the slip surface.

The slip surface of most probable sliding fault may for example be found by applying Bishop's method on a set of predetermined probable slip circles. The torque resisting portion in which the columns are placed corresponds to the passive zone of the slip surface of most probable sliding fault.

According to an embodiment, the method comprises forming the columns with a first column portion having a first column diameter in an upper soil layer, and with a second column portion having a second column diameter in the one or more underlying soil layers. In this embodiment, the second column diameter is at least 30% larger than the first column diameter.

The column diameter may be kept relatively small in the upper soil layer, which may have a relatively high volumetric weight, whereas the column diameter may be increased further downward in the soil region that may correspond to the one or more soft soil layers. Locally increasing the column diameter in the soft soil layers allows an optimal localization of the mass density increase (provided by the column material) in these soft soil layers, while avoiding excess use of column material in the soil regions where only little mass density gains can be obtained.

Such columns with locally varying column diameters may be efficiently obtained by using a depth vibrator for placing the columns into the landside berm.

The first and second column portions may form predominantly cylindrical column segments. The first column diameter may for example have a value of about 0.5 meter, and the second column diameter may for example have a value of at least 0.8 meter.

According to an embodiment, the columns are placed through the landside berm and into the one or more soft soil layers by means of a depth vibrator. The use of a depth vibrator for column construction may have several advantages. One advantage may be that the column material is discharged via the vibrator tip, which allows construction of a single continuous column (i.e. a single body of condensed material, possibly with a uniform or a varying lateral column diameter). Other advantages of the depth vibrator technique may be that caving in of the column bore hole may be reduced or avoided, and that there may be no need to use rinsing agents (e.g. water) for keeping the working area accessible. By the use of a depth vibrator, the columns may be positioned into the soil with a proven localized and less invasive method, so that disruption of the environment may be minimized.

The depth vibrator serves for placing the column material into the soil, thereby replacing and compacting the surrounding soil. The process may thus also be referred to as "vibro replacement" and the depth vibrator may also be referred to as "feed vibrator". For the construction of vibro replacement columns a bottom feed process may be used, which feeds the granular material and impermeable filler to the tip of the vibrator, possibly with the aid of pressurized air. The vibro replacement process consists of alternating steps. During the retraction step, granular material and filler runs from the vibrator tip into the annular space created and is then compacted and pressed into the surrounding soil during the subsequent re-penetration step. In this manner the columns are created from the bottom up, which behave as a composite material with the surrounding soil under load.

A potential further advantage of using the depth vibrator technique relates to the desired smaller permeability (or hydraulic conductivity) of the columns with respect to the upper soil layer. A local compacting effect of the depth vibrator onto the soil layers during placement of a column may cause these local soil portions to tightly envelop and seamlessly engage with the resulting column. Tight column envelopment by the upper soil layer may avoid creation of an annular gap directly around the column, which in turn helps to reduce or even avoid vertical fluid drainage between the berm surface and the underlying soil layers.

According to a further embodiment, the method comprises drilling a first void portion and removing soil from the upper soil layer, prior to placing the columns through the landside berm into the one or more soft soil layers with the depth vibrator.

By drilling the first void portion and removing the corresponding soil prior to forming the corresponding column, the probability of negative soil displacement effects will be reduced. This further reduces the probability of disrupting directly surrounding structures (like foundations, cabling, conduits, and plant roots) during column placement.

According to an embodiment, placing of the columns comprises arranging at least two columns at transversally consecutive positions across the landside berm (i.e. consecutive positions with respect to the transversal coordinate).

The transversal direction corresponds to the landside direction. The arrangement of two or more columns (or even two or more longitudinal column rows) at transversally consecutive positions along the landside berm ensures that the transversal extent of the landside berm is utilized for column placement, to achieve the desired increases in mass density and stabilization.

According to an embodiment, the method comprises placing the columns with a predominantly vertical orientation in the one or more soft soil layers.

The proposed method allows stability to be increased by using just vertical columns. The use of vertical columns poses less severe requirements to the equipment needed for constructing and placing the columns. Moreover, the shape of columns can be controlled effectively, in contrast to tilted columns.

According to an embodiment, the method comprises placing the columns in a spatially separated distribution in the one or more soft soil layers.

The term "spatially separated" refers herein to a spatial distribution of the columns in the longitudinal direction and the transversal direction, such that the columns do not mutually touch or overlap. Preferably, sufficient spacing is left open between the columns, such that at least 50% of the cross sectional profile viewed along the transversal direction remains available for the soil and for water currents flowing there through. This significantly reduces the probability of causing hydrological blockades. According to a further embodiment, the method comprises placing the columns with mutual spacing with a value in a range of 0.5 meter to 2.5 meter, preferably with mutual spacing in a range of 1.0 meter to 2.0 meter, and more preferably of about 1.5 meter.

According to an embodiment, a supporting sand layer is situated underneath the soft soil layers, and the columns are arranged so as to extend through the one or more soft soil layers into the supporting sand layer. In this embodiment, the columns comprise reinforcing material for increasing a strength and/or stability of the columns.

By letting the columns extend deeper into the lower supporting sand layer, shear strains that occur along the sliding surface may be transferred via the columns to the supporting sand layer. The columns may function as so-called "dowels", and the resulting increase of the shear resistance in the soft soil layers will yield an additional increase in the inwards macro stability of the levee.

According to a further embodiment, the reinforcing material may comprise fiber materials.

According to a further embodiment, the reinforcing material can comprise a geo textile for enveloping the columns, and the method may comprise applying the geo textile prior to placing the columns.

According to another further embodiment, the reinforcing material may be formed as steel rods, and wherein the method may comprise inserting the steel rods in the columns after placing the columns.

By applying reinforcing steel and/or geo textile, the shear strength of the columns will be increased. This may lead to a further improvement of the inwards macro stability for the levee, or to a reduction of the number of columns or the size of the column area needed to achieve a predetermined macro stability.

### BRIEF DESCRIPTION OF DRAWINGS

Embodiments will now be described, by way of example only, with reference to the accompanying schematic drawings in which corresponding reference symbols indicate corresponding parts, and in which:
Figure 1 schematically shows a cross-sectional view with typical elements of a levee according to the prior art;
Figure 2 presents a cross-sectional view of a portion of a levee and a slip surface according to an embodiment of the invention;
Figure 3 shows a column distribution in a landside berm according to a method embodiment, and
Figure 4 illustrates a method for applying stabilization columns according to a method embodiment.

The figures are meant for illustrative purposes only, and do not serve as restriction of the scope or the protection as laid down by the claims.

### DESCRIPTION OF EMBODIMENTS

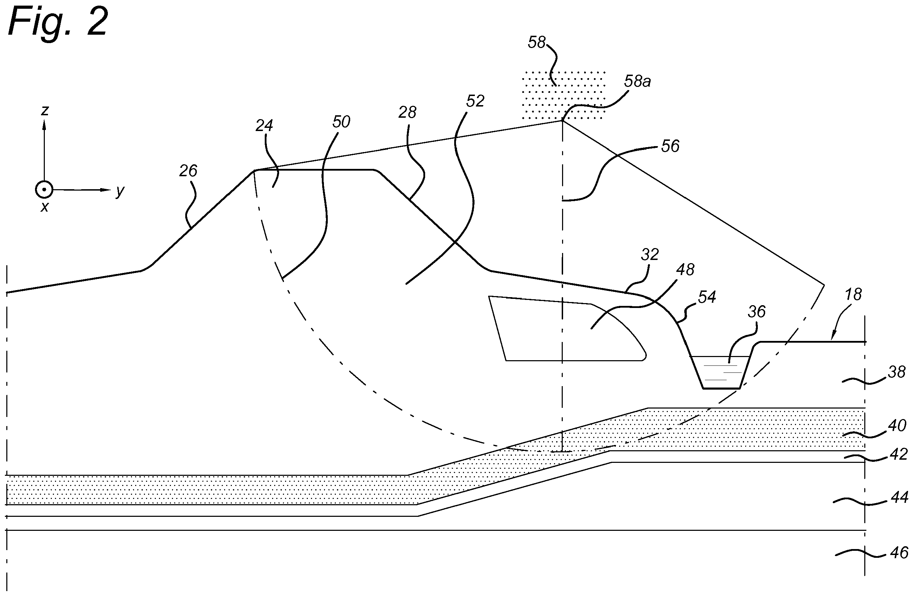

The following is a description of certain embodiments of the invention, given by way of example only and with reference to Figures 2-4.

Embodiments according to the invention generally relate to methods for improving a stability of an existing levee 10. The examples presented below will therefore be discussed with reference to the general terminology and reference numbers discussed herein above with reference to Figure 1.

Figure 2 illustrates that the levee 10 and the subsoil elements 16-20 may typically be formed by soil layers 38-46 of different constitution and typical mass densities. An first (uppermost) soil layer 38 may consist essentially of clay, whereas lower subsequent soil layers may essentially consist of peat 40, clay 42, sand clay 44, and a supporting sand layer 46 respectively. For levees in general, the hydrological properties and the response of such soil layers 38-46 to changing water conditions influence the levee's stability. In particular, the peat layer 40 has a high fluid absorbing capacity and a low (unsaturated) mass density compared to the other soil layers. Changing water conditions (e.g. the height of the water body 35 on the water side 12) affect the mechanical properties and fluid dynamics in the soil layers 38-46, and the peat layer 40 in particular. This is highly riskful for foundations in these areas.

The proposed method comprises applying columns 60 through the existing landside berm 32 into one or more soft soil layers 40 (and possibly 38 and 42-46, depending on local soil conditions), which are situated directly below the levee 10, and which have corresponding volumetric weight ys. The columns 60 have a column volumetric weight yc that is significantly larger than the volumetric weights ys of the soft soil layer 40 (and possibly 38, 42-46). The columns 60 serve as mass loading structures, intended to increase a total mass of a torque resisting portion 54 of the land side 14 of the levee 10, which corresponds with the landside berm 32. The application of such columns 60 may also reduce the average leakage length for seepage underneath the levee 10, and hence may lower the risk for piping effects.

In this exemplary embodiment, the soft soil layer(s) is formed by a peat layer 40 with a volumetric weight yp having a typical value in a range of 9 kN/m³ to 14 kN/m³. In contrast, the columns 60 have a volumetric weight yc of at least 18 kN/m³. The columns 60 are positioned extending at least down to the soft soil layer(s) (e.g. peat layer) 40, to increase the average volumetric weight in this layer. Note that in alternative embodiments, any number of soft soil layers may be present in the levee and any ordering of the layers may be possible. For example, a levee may be formed on a soil layer configuration with multiple soft peat layers and intermediate denser soil layers.

In this example, the method comprises determining a slip surface 50 of most probable sliding fault for the landside slope 28 and the landside berm 32 of the levee 10. This slip surface 50 is subsequently partitioned into a torque inducing portion 52 situated near the crown 24 of the levee 10 on the one hand, and a torque resisting portion 54 near the land side berm 32. These surface portions 52, 54 are separated by a boundary line 56.The columns 60 are then arranged in the soft soil layer(s) 40 (38, 42) at the torque resisting portion 54 of the slip surface 50.

This slip surface 50 of most probable sliding fault may for example be found by applying Bishop's method on a set of predetermined probable slip circles corresponding with a distribution of adjacent circle centers 58. Sliding fault assessment may also be possible with alternative slip surface calculation methods or finite element methods. In an embodiment wherein Bishop's method is used, the slip surface 50 of most probable sliding fault is mapped to a slip circle 50 with a circle center 58a. The torque resisting portion 54 corresponds in this case with the passive zone of the slip circle 50 of most probable sliding fault. The soft soil layer(s) 40 (38, 42-46) will thus be locally weighted within the torque resisting portion 54 of the slip surface 50, so that the torque component with respect to the circle center 58a of the slip surface 50 - which counteracts the torque from the soil in the torque inducing portion 52 - is significantly increased. This torque compensation yields an increased stability for the levee 10.

Due to the presence of the columns 60 in the torque resisting portion 54 of the slip surface 50, the average shear strength of the soft soil layer(s) 40 (38, 42) may also be locally increased in this region, yielding a further improvement of the stability factor.

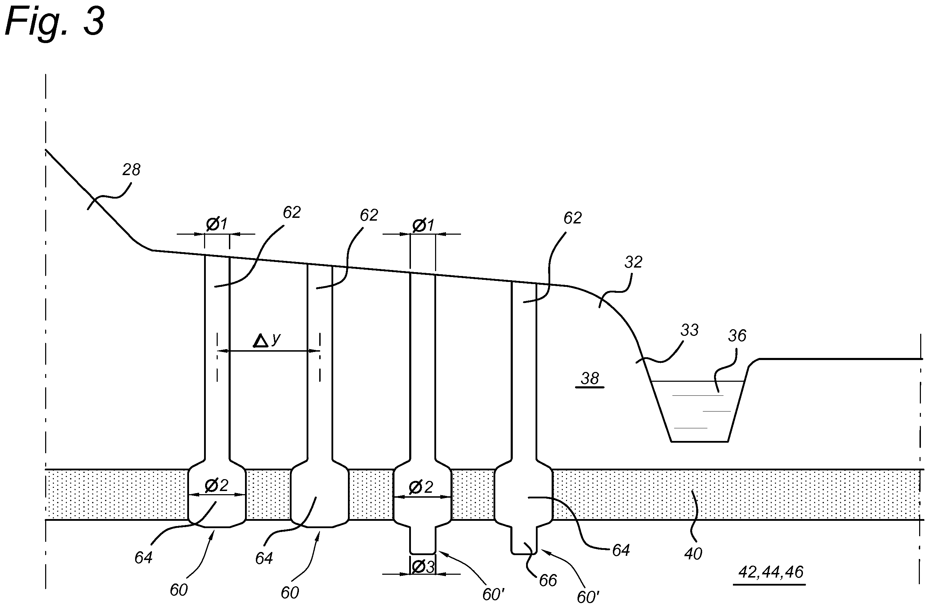

Figure 3 depicts a cross-section of a column distribution in the landside berm 32, according to an embodiment. The columns 60 have been arranged near the landside heel 33, in such a manner that the local increase of the (average) volumetric weights of the clay layer 38 and the peat layer 40 extends inwards towards the land side 14. As a result, the counter torque generated by the torque resisting portion 54 is significantly increased. Because natural material is not removed or remolded but pushed together, the natural structure of peat is preserved, prohibiting loss of shear strength.

In this example, the columns 60 consist essentially of a granular mixture of gravel and cement-bentonite, with further fillers for adjusting the rheological properties of the cement-bentonite suspension, and the strength and hardening properties of the resulting granular mixture. The following global component ratio may be adhered to: about 80 weight % gravel and about 20 weight % fillers. Such granular mixture may have a typical volumetric weight with a value of about 20 kN/m³. The columns 60 are vertically impermeable for reasons of water safety. The phrase "vertically impermeable" implies in this context that the water/fluid permeability (hydraulic conductivity) of the columns is similar to or even less than a permeability (hydraulic conductivity) of the surrounding upper soil layer 38. As a result, the columns 60 are not formed to act as vertical fluid drainage conduits.

As is shown in figure 3, at least a portion of the columns 60' may extend through the soft soil layers 40, and down to the underlying soil layers 42, 44 as well as the supporting sand layer 46. This column portion 60' provides a dowel effect, that allows transferring of sliding loads occurring along sliding surfaces (e.g. on the slip surface 50) via this column portion 60' to the supporting sand layer 46. Through addition of fibrous material to the granular mixture, the shear strength of the resulting column portion 60' will be increased, which may improve the local (average) shear resistance of the soft soil layer(s) 40 (38, 42-46) in the torque resisting portion 54.

According to Figure 3, the columns 60, 60' in this example are formed with column sections 62-66 that have different characteristic cross-sectional dimensions Ø1- Ø3. Each of the columns 60, 60' is accommodated in a column void (not indicated) that extend through at least some of the soil layers 38-46, and which includes at least and upper void section 72. Such columns 60, 60' may be formed via a method described further below. In this example, the column sections 62-66 have (macroscopically) cylindrical shapes. Here, the diameters Ø2 of the second column sections 64 located in the peat layer 40 have the largest value, to achieve a significant increase in the average volumetric weight of the (relatively light) peat layer 40. In this example, the first column sections 62 in the upper clay layer 38 have upper diameters Ø1 of about 0.5 meter, and the second column sections 64 in the peat layer 40 have diameters Ø2 of about 0.8 meter. A lowest diameter Ø3 of the third column sections 66 (which belong to the columns 60' that extend down to the supporting sand layer 46) is comparable to the upper diameters Ø1 i.e. about 0.5 meter.

In this example, the columns 60, 60' have been positioned in a mutually separated arrangement (viewed along the longitudinal and transversal directions X,Y), such that the columns 60, 60' do not mutually touch or overlap. The column distribution in this example may be characterized by a transversal nearest neighbor distance ΔY of about 1.0 meter to 1.5 meter, and a longitudinal nearest neighbor distance of about 1.5 meter.

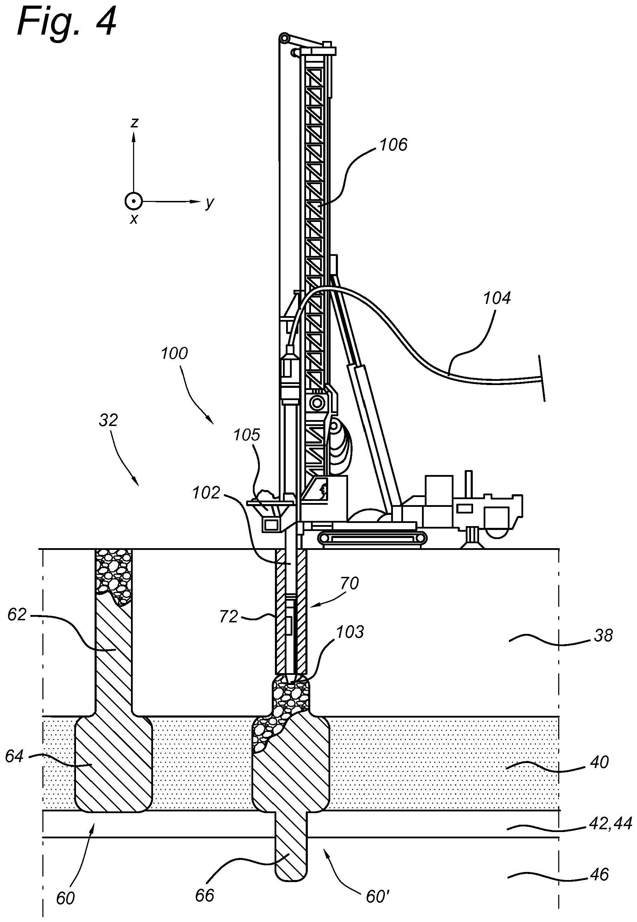

Figure 4 illustrates a method for forming and placing the columns 60, 60' in the soft soil layer(s) 40 (38, 42-46) according to an embodiment. In this example, a depth vibrator 100 is employed for in-situ construction of the columns 60, 60'. An exemplary depth vibrator is described in patent document EP1234916. In the example of Figure 4, the depth vibrator 100 is attached to a rig 106, and comprises a supply tube 102 with a discharge opening 103 at a lower end thereof, a suspension conduit 104 for supplying a filler suspension to the supply tube 102, and a trough 105 for locally supplying gravel. The supply tube 102 is rotatable with respect to an axis along the height direction Z. The supply tube 102 is rotatable in an eccentric manner about this axis (i.e. the symmetry axis and rotation axis of the supply tube 102 are parallel but laterally shifted), to enable the depth vibrator 100 to force soil components laterally away while the supply tube 102 is lowered into the various soil layers 38-46.

The depth vibrator 100 and rig 106 require only a single deployment, after which the supply tube 102 may be lowered into the soil layers 38-46 of the existing landside berm 32. The eccentric rotation of the supply tube 102 about its axis of rotation causes local lateral displacement of the soil and allows penetration of the supply tube 102 with its discharge opening at least down to the peat layer 40. To construct the extended columns 60', the depth vibrator needs to be further lowered with its discharge opening 103 down into the further layers 42-46, and down to the supporting sand layer 46 in particular.

Subsequently, gravel is provided into the trough 105 (e.g. via a power shovel). The gravel and the filler suspension are allowed to mix inside the supply tube 102. Once the depth vibrator 100 has reached its intended depth, the supply tube 102 is slightly lifted, which allows the granular mixture to emanate from the discharge opening 103 into the locally created column void. The depth vibrator 100 is intermittently lowered in a vibrating manner, to locally condense the granular mixture and laterally force the mixture into the respective soil layer 38-46. Via intermittent raising and lowering of the depth vibrator 100, a continuous column 60, 60' is formed that extends through the soil layers 38-46 up to a desired height.

In one embodiment, the depth vibrator 100 has a maximum tube diameter Øt of 0.5 meter. When such a depth vibrator 100 is urged though the supporting sand layer 46, the first local column diameter Ø1 will have a similar value of about 0.5 meters. Due to the weak soil cohesion of the peat layer 40, the second local column diameter Ø2 in this peat layer 40 will be considerably larger e.g. about 0.8 meter or larger.

In order to reduce the probability of negative soil displacement effects in the upper clay layer 38, first void sections 72 may initially be drilled and the corresponding clay removed, before the columns 60, 60' are formed in the soil layers 38-46 by means of the depth vibrator 100. Alternative measures may be variations of patterns and diameter around critical objects.

The descriptions above are intended to be illustrative, not limiting. It will be apparent to the person skilled in the art that alternative and equivalent embodiments of the invention can be conceived and reduced to practice, without departing from the scope of the claims set out below.

### LIST OF REFERENCE SYMBOLS

- 10: levee
- 12: water side
- 14: land side
- 16: waterside land
- 18: lowland
- 20: levee base
- 22: levee core
- 24: crown
- 26: waterside slope
- 28: landside slope
- 30: waterside berm
- 31: waterside toe
- 32: landside berm
- 33: landside heel
- 35: water body
- 36: drainage trench
- 38: first soil layer e.g. clay
- 40: second soil layer e.g. peat
- 42: third soil layer e.g. clay
- 44: fourth soil layer
- 46: fifth soil layer e.g. Pleistocene or Holocene sand
- 48: berm sand
- 50: slip surface (e.g. circle)
- 52: torque inducing portion
- 54: torque resistive portion
- 56: boundary line
- 58: set of circle centers
- 60: column (with mineral aggregate and impermeable filler)
- 62: first column section
- 64: second column section
- 66: third column section
- 68: fiber material
- 70: column void
- 72: first void section
- 100: depth vibrator
- 102: supply tube
- 103: discharge opening
- 104: suspension supply conduit
- 105: trough
- 106: rig
- Ø1: first column diameter
- Ø2: second column diameter
- Ø3: second column diameter
- Øt: vibrator diameter
- X: longitudinal direction
- Y: transversal direction
- Z: height direction

## Claims

1. A method for improving an inwards stability of an existing levee (10) including a landside slope (28) and a landside berm (32), wherein the method comprises:
- placing columns (60) by means of a depth vibrator (100) through the landside berm into one or more soft soil layers (40) with corresponding soil volumetric weights (ys), wherein the columns have a column volumetric weight (yc) that is at least 10% larger than the soil volumetric weights, and wherein the columns comprise a mineral aggregate and an impermeable filler.

2. The method according to claim 1, wherein the impermeable filler comprises a hydraulic binding agent.

3. The method according to claim 1 or 2, comprising:
- determining a slip surface (50) of most probable sliding fault for the landside slope (28) and the landside berm (32);
- partitioning the slip surface into a torque inducing portion (52) related to the crown (24) of the levee (10) and a torque resisting portion (54) related to the landside berm;
wherein placing the columns (60) involves arranging the columns in the one or more soft soil layers (40) at the torque resisting portion.

4. The method according to any one of claims 1-3, comprising:
- forming the columns (60) with a first column portion (62) having a first column diameter (Ø1) in an upper soil layer (38), and with a second column portion (64) having a second column diameter (Ø2) in the one or more underlying soil layers (40), wherein the second column diameter is at least 30% larger than the first column diameter.

5. The method according to any one of claims 1-4, comprising:
- drilling a first void portion (72) and removing soil from the upper soil layer (38), prior to placing the columns (60) through the landside berm (32) into the one or more soft soil layers (40) with the depth vibrator (100).

6. The method according to any one of claims 1-5, wherein placing the columns (60) comprises arranging at least two columns (60) at transversally consecutive positions across the landside berm (32).

7. The method according to any one of claims 1-6, comprising:
- placing the columns (60) with a predominantly vertical orientation in the one or more soft soil layers (40).

8. The method according to any one of claims 1-7, comprising:
- placing the columns (60) in a spatially separated distribution in the one or more soft soil layers (40).

9. The method according to claim 8, comprising:
- placing the columns (60) with mutual spacings with a value in a range of 0.5 meter to 2.5 meter, preferably with mutual spacings in a range of 1.0 meter to 2.0 meter, and more preferably of about 1.5 meter.

10. The method according to any one of claims 1-9, wherein the columns comprise further fillers for adapting at least one of the rheological properties, the strength properties, or the hardening properties of the columns.

11. The method according to any one of claims 1-10, wherein a supporting sand layer (46) is situated underneath the soft soil layers (40), wherein the columns are arranged so as to extend through the one or more soft soil layers into the supporting sand layer, and wherein the columns (60) comprise reinforcing material for increasing a strength and/or stability of the columns.

12. The method according to claim 11, wherein the reinforcing material comprises fiber materials.

13. The method according to claim 11, wherein the reinforcing material comprises a geo textile for enveloping the columns (60), and wherein the method comprises:
- placing the geo textile prior to placing the columns.

14. The method according to claim 11, wherein the reinforcing material is formed into steel rods, and wherein the method comprises:
- inserting the steel rods into the columns (60) after placing the columns.

## Patentansprüche

1. Verfahren zur Verbesserung einer nach innen gerichteten Stabilität eines bestehenden Deiches (10) mit einer landseitigen Schräge (28) und einer landseitigen Berme (32), wobei das Verfahren umfasst:
- Platzieren von Säulen (60) mittels eines Tiefenrüttlers (100) durch die landseitige Berme in eine oder mehrere weiche Bodenschichten (40) mit entsprechenden Bodenvolumengewichten (γs), wobei die Säulen ein Säulenvolumengewicht (γc) aufweisen, das wenigstens 10% größer ist als die Bodenvolumengewichte, und wobei die Säulen ein Mineralaggregat und einen undurchlässigen Füllstoff umfassen.

2. Verfahren nach Anspruch 1, wobei der undurchlässige Füllstoff ein hydraulisches Bindemittel umfasst.

3. Verfahren nach Anspruch 1 oder 2, umfassend:
- Bestimmen einer Rutschfläche (50) mit der wahrscheinlichsten Abrutschstörung für die landseitige Schräge (28) und die landseitige Berme(32);
- Unterteilen der Rutschfläche in einen der Krone (24) des Deiches (10) zugeordneten drehmomenteinleitenden Abschnitt (52) und einen der landseitigen Böschung zugeordneten drehmomentresistenten Abschnitt (54); wobei das Platzieren der Säulen (60) das Anordnen der Säulen in der einen oder den mehreren weichen Bodenschichten (40) an dem drehmomentresistenten Abschnitt beinhaltet.

4. Verfahren nach einem der Ansprüche 1 bis 3, umfassend:
- Bilden der Säulen (60) mit einem ersten Säulenabschnitt (62) mit einem ersten Säulendurchmesser (Ø1) in einer oberen Bodenschicht (38) und mit einem zweiten Säulenabschnitt (64) mit einem zweiten Säulendurchmesser
(Ø2) in der einen oder den mehreren darunterliegenden Bodenschichten (40), wobei der zweite Säulendurchmesser mindestens 30% größer ist als der erste Säulendurchmesser.

5. Verfahren nach einem der Ansprüche 1 bis 4, umfassend:
- Bohren eines ersten Hohlraumabschnittes (72) und Entfernen von Grund von der oberen Bodenschicht (38), bevor die Säulen (60) mit dem Tiefenrüttler (100) durch die landseitige Berme (32) in die eine oder die mehreren weichen Bodenschichten (40) platziert werden.

6. Verfahren nach einem der Ansprüche 1 bis 5, wobei das Platzieren der Säulen (60) das Anordnen von wenigstens zwei Säulen (60) in transversal aufeinanderfolgenden Positionen über die landseitige Berme (32) umfasst.

7. Verfahren nach einem der Ansprüche 1 bis 6, umfassend:
- Platzieren der Säulen (60) mit einer vorwiegend vertikalen Ausrichtung in der einen oder den mehreren weichen Bodenschichten (40).

8. Verfahren nach einem der Ansprüche 1 bis 7, umfassend:
- Anordnen der Säulen (60) in einer räumlich getrennten Verteilung in der einen oder den mehreren weichen Bodenschichten (40).

9. Verfahren nach Anspruch 8, umfassend:
- Platzieren der Säulen (60) in gegenseitigen Abständen mit einem Wert in einem Bereich von 0,5 m bis 2,5 m, vorzugsweise in gegenseitigen Abständen in einem Bereich von 1,0 m bis 2,0 m, und besonders bevorzugt in gegenseitigen Abständen von ungefähr 1,5 m.

10. Verfahren nach einem der Ansprüche 1 bis 9, wobei die Säulen weitere Füllstoffe zum Anpassen wenigstens einer der rheologischen Eigenschaften, der Festigkeitseigenschaften, oder der Härtungseigenschaften der Säulen umfassen.

11. Verfahren nach einem der Ansprüche 1 bis 10, wobei eine Stützsandschicht (46) unterhalb der weichen Bodenschichten (40) angeordnet ist, wobei die Säulen so angeordnet sind, dass sie sich durch die eine oder die mehreren weichen Bodenschichten hindurch in die Stützsandschicht erstrecken, und wobei die Säulen (60) Verstärkungsmaterial umfassen, um eine Festigkeit und/oder Stabilität der Säulen zu erhöhen.

12. Verfahren nach Anspruch 11, wobei das Verstärkungsmaterial Fasermaterialien umfasst.

13. Verfahren nach Anspruch 11, wobei das Verstärkungsmaterial ein Geotextil zum Umhüllen der Säulen (60) umfasst, und wobei das Verfahren umfasst:
- Platzieren des Geotextils vor dem Platzieren der Säulen.

14. Verfahren nach Anspruch 11, wobei das Verstärkungsmaterial zu Stahlstäben geformt ist, und wobei das Verfahren umfasst:
- Einführen der Stahlstäbe in die Säulen (60) nach dem Platzieren der Säulen.

## Revendications

1. Procédé pour améliorer la stabilité interne d'une levée existante (10) comprenant une pente côté terre (28) et un talus côté terre (32), dans lequel le procédé comprend :
- le placement de colonnes (60), à l'aide d'un vibrateur en profondeur (100), dans le talus côté terre, dans une ou plusieurs couches de sol meuble (40) ayant des poids volumétriques de sol correspondants (ys), dans lequel les colonnes possèdent un poids volumétrique de colonnes (yc) qui est au moins 10% supérieur aux poids volumétriques du sol, et dans lequel les colonnes comprennent un agrégat minéral et une charge imperméable.

2. Procédé selon la revendication 1, dans lequel la charge imperméable comprend un agent de liaison hydraulique.

3. Procédé selon la revendication 1 ou 2, comprenant :
- la détermination d'une surface de glissement (50), pour le glissement le plus probable, pour la pente côté terre (28) et le talus côté terre (32) ;
- la séparation de la surface de glissement en une partie induisant un couple (52) liée au sommet (24) de la levée (10) et une partie de résistance au couple (54) liée au talus côté terre ;
dans lequel le placement des colonnes (60) implique l'agencement des colonnes dans l'une ou plusieurs couches de sol meuble (40) au niveau de la partie de résistance au couple.

4. Procédé selon l'une quelconque des revendications 1 à 3, comprenant :
- la formation des colonnes (60) avec une première partie de colonnes (62) ayant un premier diamètre de colonnes (Ø1) dans une couche de sol supérieure (38), et avec une seconde partie de colonnes (64) ayant un second diamètre de colonnes (Ø2) dans l'une ou plusieurs couches de sol sous-jacente(s) (40), dans lequel le second diamètre de colonnes est au moins 30% supérieur au premier diamètre de colonnes.

5. Procédé selon l'une quelconque des revendications 1 à 4, comprenant :
- le perçage d'une première partie de vide (72) et le retrait du sol de la couche de sol supérieure (38), avant de placer les colonnes (60) dans le talus côté terre (32), dans l'une ou plusieurs couches de sol meuble (40), avec le vibrateur en profondeur (100).

6. Procédé selon l'une quelconque des revendications 1 à 5, dans lequel le placement des colonnes (60) comprend l'agencement d'au moins deux colonnes (60) à des emplacements transversalement consécutifs au sein du talus côté terre (32).

7. Procédé selon l'une quelconque des revendications 1 à 6, comprenant :
- le placement des colonnes (60) selon une orientation principalement verticale dans l'une ou plusieurs couches de sol meuble (40).

8. Procédé selon l'une quelconque des revendications 1 à 7, comprenant :
- le placement des colonnes (60) selon une répartition à séparation dans l'espace dans l'une ou plusieurs couches de sol meuble (40).

9. Procédé selon la revendication 8, comprenant :
- le placement des colonnes (60) avec des espacements mutuels de l'ordre de 0,5 mètre à 2,5 mètres, de préférence avec des espacements mutuels de l'ordre de 1 mètre à 2 mètres, et de préférence d'environ 1,5 mètre.

10. Procédé selon l'une quelconque des revendications 1 à 9, dans lequel les colonnes comprennent d'autres charges destinées à s'adapter à au moins l'une des propriétés rhéologiques, des propriétés de résistance ou des propriétés de durcissement des colonnes.

11. Procédé selon l'une quelconque des revendications 1 à 10, dans lequel une couche de sable de support (46) est située sous les couches de sol meuble (40), dans lequel les colonnes sont prévues de façon à s'étendre à travers l'une ou plusieurs couches de sol meuble dans la couche de sable de support, et dans lequel les colonnes (60) comprennent un matériau de renfort destiné à augmenter une résistance et/ou une stabilité des colonnes.

12. Procédé selon la revendication 11, dans lequel le matériau de renfort comprend des matériaux fibreux.

13. Procédé selon la revendication 11, dans lequel le matériau de renfort comprend un géotextile destiné à envelopper les colonnes (60), et dans lequel le procédé comprend :
- le placement du géotextile avant de placer les colonnes.

14. Procédé selon la revendication 11, dans lequel le matériau de renfort est formé en tiges d'acier, et dans lequel le procédé comprend :
- l'insertion des tiges d'acier dans les colonnes (60) après le placement des colonnes.
